# EUROPEAN PATENT APPLICATION

(11) **EP 2 096 575 A2**
(43) Date of publication of application: **02.09.2009**
(21) Application number: 09002437.3
(22) Date of filing: 20.02.2009
(51) Int. Cl.: G06K 9/00, G01C 21/26

(54) **Road sign recognition apparatus and road sign recognition method**

(30) Priority: 27.02.2008 JP 2008046617
(71) Applicant: Hitachi Ltd., Chiyoda-ku Tokyo 100-8280 (JP)
(72) Inventor: Irie, Kota, Chiyoda-ku, Tokyo 100-8220 (JP); Kiyohara, Masahiro, Chiyoda-ku, Tokyo 100-8220 (JP); Kourogi, Naoki, Chiyoda-ku, Tokyo 100-8220 (JP)
(74) Representative: MERH-IP Matias Erny Reichl Hoffmann

(57) **Abstract**

A road sign recognition apparatus generates a mosaic image (920) formed by connecting accumulated images from a camera (99) in time-series order, determines multiple road signs contained in the mosaic image (920) by template matching, and generates positional information for the use of knowing a relative position of a vehicle (90) to the road sign.

## Description

### BACKGROUND OF THE INVENTION

The present invention relates to a technique of detecting a road sign by using an image.

A technique is known in which a road sign is detected from an image captured by an image capture apparatus mounted in a vehicle, and navigational information is updated to be current, thereby to enable accurate coordination.

For example, there is known a technique in which a symbol string or a character string of a road sign is detected, remaining symbols or characters in a captured image are relatively determined, and then an image processing area is set. See, for example, JP-A-2006-127358.

According to the technique described in JP-A-2006-127358, the positions of determinable symbols or character positions is limited to that included in the current captured image. In the case where, for example, no remainder of the road sign is present or the paint is scratchy or insufficient in thickness, it is difficult to recognize the positions. Further, the technique is insufficient in resistance against disturbance, such that there is a probability that a luminance difference caused due to a shadow in the captured image is misrecognized as a road sign.

An object of the present invention is to provide a technique that is capable of accumulating images captured by a camera and that is capable of identifying even a road sign not contained in a current captured image in accordance with a combination of estimated road signs.

To achieve the abovementioned objective, one aspect of the present invention is to provide a road sign recognition apparatus including an image generation unit that generates a synthetic image so that a plurality of images of an in-vehicle camera captured are respectively transformed to images downwardly viewing from a vertical direction and are connected to one another in time-series order; and/or an identification means that determines types of road signs contained in the synthetic image in a manner that a quantity of features of the synthetic image is extracted and compared to a preliminarily provided template.

### BRIEF DESCRIPTION OF THE DRAWINGS

FIG. 1 is a block diagram illustrating a functional configuration of a road sign recognition system of a first embodiment;
FIG. 2 is a schematic view, including a frame image, top-view image, and a mosaic image;
FIG. 3 is a schematic view of an identification table;
FIG. 4 is a flow diagram of generating positional information from real images;
FIG. 5 is a flow diagram of a mosaic processing that is executed by a road sign recognition apparatus of one embodiment of the first embodiment;
FIG. 6 is a schematic view illustrating the results of executions of a luminance projection process and an edge extraction process for a mosaic image with respect to longitudinal and transverse directions;
FIG. 7 is a schematic view of a mosaic image inclusive of areas of high luminance values caused by shadows;
FIG. 8 includes FIGS. 8(a) and 8(b), in which FIG. 8(a) is a schematic view illustrating a process area and transverse luminance components corresponding thereto, and FIG. 8(b) is a schematic view illustrating a transverse luminance projection pattern prior to correction and a transverse luminance projection pattern after correction;
FIG. 9 includes FIGS. 9(a) and 9(b), in which FIG. 9(a) is a schematic view of an identification table, and FIG. 9(b) is a schematic view of an arrangement table;
FIG. 10 is a block diagram illustrating a functional configuration of a road sign recognition system of a second embodiment;
FIG. 11 is a schematic view of peripheral information that is generated by a vehicular navigational system;
FIG. 12 is flow diagram illustrating an outline of a process that the road sign recognition apparatus of the second embodiment executes to generate positional information from real images; and
FIG. 13 is a block diagram illustrating an electrical configuration of a road sign recognition apparatus.

### DETAILED DESCRIPTION OF THE PREFERRED EMBODIMENTS

Embodiments are described with reference to the drawings. (First Embodiment)

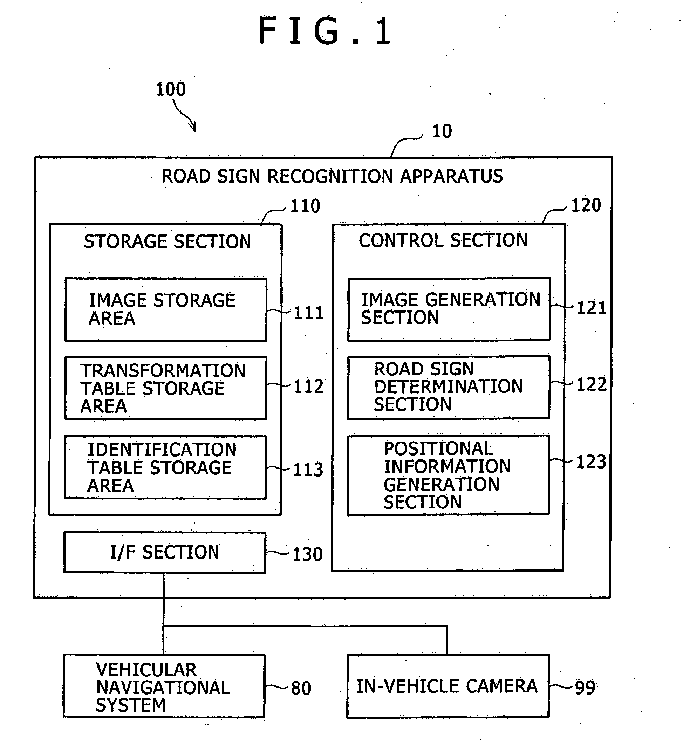

FIG. 1 is a block diagram illustrating a functional configuration of a road sign recognition system 100 of a first embodiment.

The road sign recognition system 100 includes a road sign recognition apparatus 10, a vehicular navigational system 80, and an in-vehicle camera 99.

The road sign recognition apparatus 10 includes a storage section 110, the control section 120, an interface section 130 ("I/F section," below).

The storage section 110 includes an image storage area 111, a transformation table storage area 112, and an identification table storage area 113.

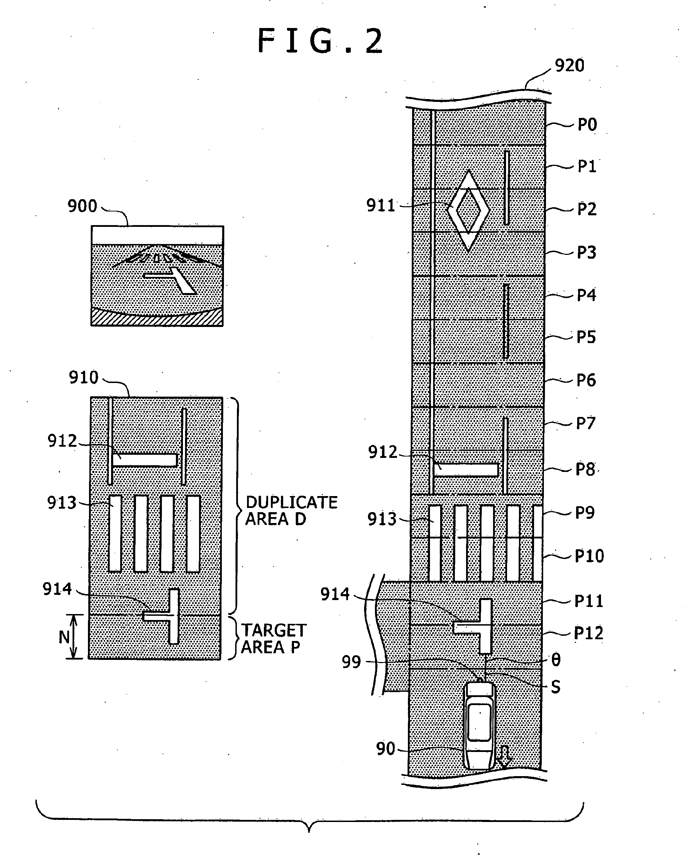

The image storage area 111 stores therein frame images acquired from the camera (in-vehicle camera 99), top-view image and mosaic images generated by an image generation section 121 from the frame images. FIG. 2 is a schematic view including examples of a frame image 900, a top-view image 910, and a mosaic image 920.

The transformation table storage area 112 stores therein a transformation table (not illustrated) necessary for generating the top-view image 910 from a real image (frame image 900). For example, in the transformation table, the coordinate positions of respective pixels of the frame image 900 and the coordinate positions of respective pixels of the top-view image 910 are correlated to one another, and correction parameters for correction for angle differences and distortion aberrations of a lens are stored in correspondence thereto. Such values or items are each uniquely determined in accordance with optical characteristics of the lens and the mounting position and angle thereof with respect to a vehicle 90. The transformation table may be acquired from another apparatus through the I/F section 130.

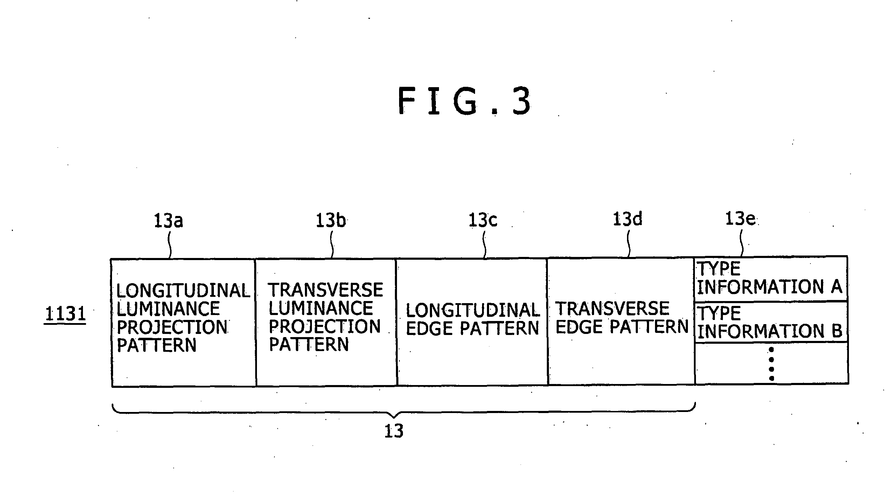

As illustrated in FIG. 3, the identification table storage area 113 preliminarily stores therein, for example, an identification table 1131 as references that are each used for designation of a road sign including a combination of two or more items.

More specifically, the identification table 1131 includes items of type information 13e (or, "type information items," below) for the use of designating the respective types of two or more combined road signs. The type information items 13e are information items indicative of, for example, type information items A, B, ··· (to follow correspondingly to the number of road signs) in order from a road sign closest to the vehicle 90.

As a quantity of features of the road sign including the combination described above, the identification table 1131 stores therein a longitudinal luminance projection pattern 13a, a transverse luminance projection pattern 13b, a longitudinal edge pattern 13c, and a transverse edge pattern 13d. The quantity of features including the four elements below is referred to as a "template 13."

The configuration may be such that the identification table 1131 is acquired from an other apparatus through the I/F section 130.

The control section 120 includes the image generation section 121, a road sign determination section 122, and a positional information generation section 123.

The image generation section 121 generates a mosaic image 920, which is formed by incorporating images captured in the past, from a real image (frame image 900) captured rearwardly of the vehicle. More specifically, the image generation section 121 acquires first a frame image 900 from an image captured by the in-vehicle camera, and stores (accumulates) the image of time-series into the image storage area 111. Subsequently, the image generation section 121 generates a top-view image 910 (plan view of the surface of the earth as viewed from sky) corresponding to the frame image 900 as viewed from the vertical direction, and applies a mosaic processing, which connects the latest top-view image 910, a mosaic image 920 synthesized in the past. The mosaic processing is a process that creates one mosaic image by connecting a multiple images obtainable from images input in series. The mosaic processing is described in further detail below.

The frame image 900 is captured in accordance with a frame rate of the in-vehicle camera 99. However, the configuration may be such that, for example, the frame rate varies corresponding to the vehicle speed, thereby to acquire frame images 900 captured at all times in a constant distance range. Still alternatively, the configuration may be such that the frame image 900 is acquired in units of a constant distance.

The road sign determination section 122 extracts the quantity of features from the mosaic image 920, and determines whether the image contains a road sign. More specifically, the road sign determination section 122 executes a feature quantity extraction process for the mosaic image 920. For example, the feature quantity extraction process executes a luminance projection process and an edge extraction process for, for example, the longitudinal and transverse directions of the mosaic image 920, thereby to extract respective elements of the quantity of features. The road sign determination section 122 executes template matching to perform a comparison between an extracted quantity of features and the template 13, thereby to identify a road sign contained in the mosaic image 920.

The positional information generation section 123 generates positional information regarding the road sign contained in the mosaic image 920, and then outputs the positional information to the vehicular navigational system 80 through the I/F section 130. The positional information includes information, such as the type of the road sign, the distance from the vehicle 90, and angles, for example.

The I/F section 130 is an interface for effecting communication with the vehicular navigational system 80. A method of communication may utilize any method. Further, the road sign recognition apparatus 10 and the vehicular navigational system 80 may be integrated together into a single unit.

The vehicular navigational system 80 is a system that uses an autonomous navigation device, such as a GPS (global positioning system), vehicle speed pulse, or gyro, thereby to execute detection of the position of the vehicle or travel passageway guiding to a destination. Further, the vehicular navigational system 80 of the present embodiment is capable of correcting the position of the vehicle 90 in cooperation with the positional information regarding the road sign output from the positional information generation section 123.

The in-vehicle camera 99 is mounted in, for example, a rear portion of the vehicle, and captures a predetermined capture range on the side rearward of the vehicle in a diagonally viewing down direction with respect to the earth surface. Of course, the mounting position is not limited to the rear portion of the vehicle, but can be mounted in a frontward portion of the vehicle or under the vehicle body.

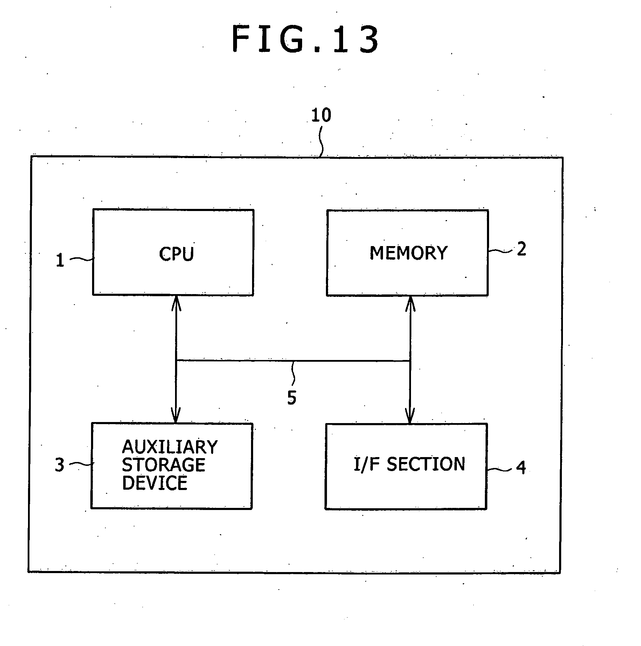

A hardware configuration of the road sign recognition apparatus 10 is described below. FIG. 13 is a block diagram illustrating an electrical configuration of a road sign recognition apparatus 10.

With reference to FIG. 13, the road sign recognition apparatus 10 is a major portion of a computer, and includes a CPU 1 (central processing unit) that performs central control of respective devices, and a memory 2 that rewritably stores therein various types of data. The road sign recognition apparatus 10 further includes various programs, an auxiliary storage device 3 that stores therein data and the like generated by programs, and a communication device 4 that communicates with an external device. The respective devices are connected to the CPU 1 through a signal line 5, which is a bus or the like.

The CPU 1 loads programs stored in, for example, the auxiliary storage device 3 into the memory 2 and executes the programs, thereby to execute various processes.

The auxiliary storage device 3 includes, for example, an HDD (hard disk drive). Of course, however, the auxiliary storage device 3 may include not only the HDD, but also drives for a CD-ROM (compact disk-read only memory) and a DVD-ROM (digital versatile disc-read only memory) as mechanisms for reading, for example, computer software products, which are distributed programs, and data.

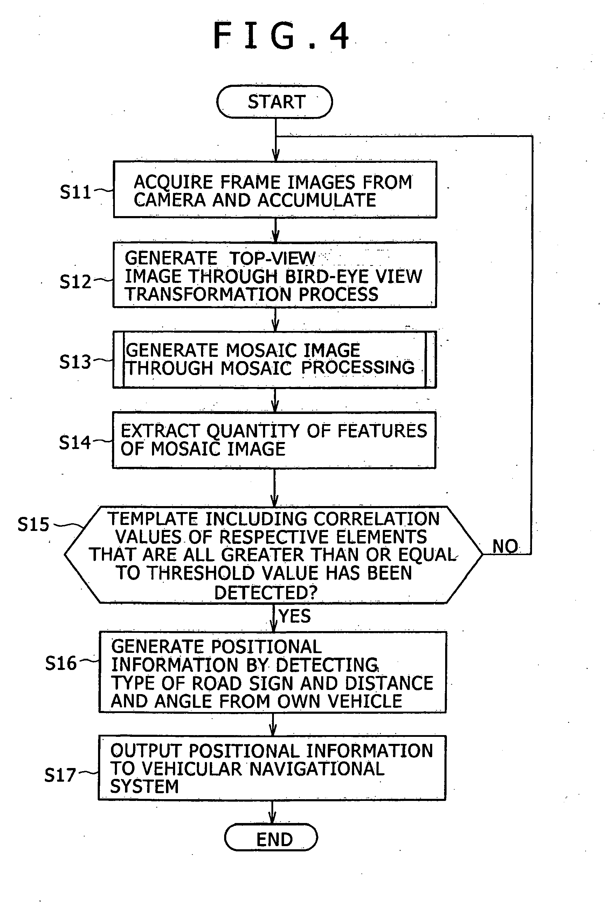

Processes to be executed in the road sign recognition apparatus 10 configured as described above is described with reference to a flow chart (flow diagram) illustrated in FIG. 4.
FIG. 4 is the flow diagram of the flow of a process of generating positional information from real images.

The image generation section 121 first acquires respective captured images of the in-vehicle camera 99, and accumulates or stores them into the image storage area 111 (step S11). More specifically, upon having acquired a respective image signal from the in-vehicle camera 99, the image generation section 121 stores a frame configuring an image as a frame image 900 into the image storage area 111 in time-series order.

Then, the image generation section 121 executes a top-view transformation process for the respective frame image 900, thereby generating a top-view image 910 (step S12). More specifically, in accordance with the transformation table, the image generation section 121 executes coordinate transformation and correction for respective pixels of the frame image 900, and renders the top-view image 910. The method of the top-view transformation process is not limited to the above-described one, but may be any method. The top-view images 910 thus generated are stored into the image storage area 111.

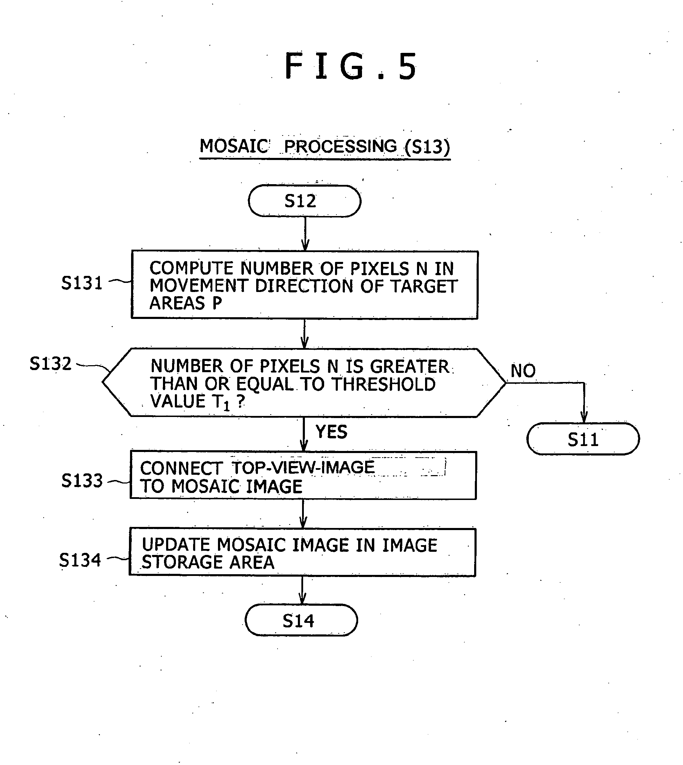

Further, the image generation section 121 executes a mosaic processing for a mosaic image formed by synthesis in the past, thereby generating a latest mosaic image (step S13). The mosaic processing to be executed by the image generation section 121 of the present embodiment is described in more detail with reference to FIGS. 2 and 5.

With reference to FIG. 2, the mosaic image 920 is formed to include a predetermined number of top-view images 910 (12 pieces in the illustrated example case) connected one by one in time-series order. Hence, in the case where the vehicle 90 is located in the position illustrated in FIG. 2, a mosaic image 920 (P0 to P11) including 12 connected top-view images 910 are stored in the image storage area 111. Further, in the illustrated example, there is illustrated the in-vehicle camera 99 capturing a latest frame image 900 including a road sign "intersection" 914, a "pedestrian crossing" 914, and a "stop line" 912.

In the case where the top-view image 910 has been generated from frame images 900 such as illustrated in FIG. 2, the generated top-view image 910 includes a duplicate area D, which is an area overlapping with a past mosaic image 920(P0-11), and target areas P that are areas to be newly connected. Then, in order to assure that the length of the target area P is greater than or equal to a predetermined length, the image generation section 121 executes a process described below. FIG. 5 is a flow diagram of the flow of the mosaic processing.

First, the image generation section 121 detects a number of pixels N in a movement direction (longitudinal direction) of the target area P (step S131). The number of pixels N can be computed from, for example, a frame rate (number/s), a movement distance per unit time period (m/s), a number of pixels in a movement direction of the frame image 900, and a number of pixels per unit distance (m/s) in the movement direction. The movement distance can be computed by acquiring the running speed that is detected by a vehicle speed sensor or the like of the vehicle 90. Further, a speed rate of a constant value is preset, and the value can be used as a reference speed rate.

Subsequently, the image generation section 121 determines whether the number of pixels N is greater than or equal to a predetermined threshold value T₁ (step S132). The threshold value T₁ is an arbitrary value for determining the area size of the target area P. More specifically, when having determined that the number of pixels N is greater than or equal to the threshold value T₁, (step S132: YES), the image generation section 121 connects the rotation limitation position P1 to a mosaic image 920 (P0-11) (step S133), thereby to acquire a latest mosaic image 920 (P1-12). Further, the image generation section 121 updates the mosaic image 920 (P0-11) of the image storage area 111 to the latest mosaic image 920(P1-12) (step S134) and instructs the road sign determination section 122 to execute the feature quantity extraction process. Then, the flow proceeds to step S14.

In the event that the number of pixels N is not greater than or equal to the threshold value T₁ (step S132: NO), it indicates that the number of pixels in the longitudinal direction of the target area P is deficient. Hence, the flow returns to step S11, and then the image generation section 121 iterates the routine of the process.

Various methods are known to carry out the image connection method at step S133. For example, a stratified matching method such as described in the following publication can be used: Kanazawa Yasushi & Kanatani Ken-ichi, "Image Mosaicing by Stratified Matching", IEICE Trans., Vol. J86-DII, No. 6, pp. 816-824, 2003 (The Institute of Electronics, Information and Communication Engineers).

According to the method, feature points of two images are extracted, and neighborhoods of the respective points are adapted through template matching. In this event, the rotation, scale change and projective distortion, for example, are progressively estimated by deformation of the template itself, thereby to be able to acquire an accurate mosaic image.

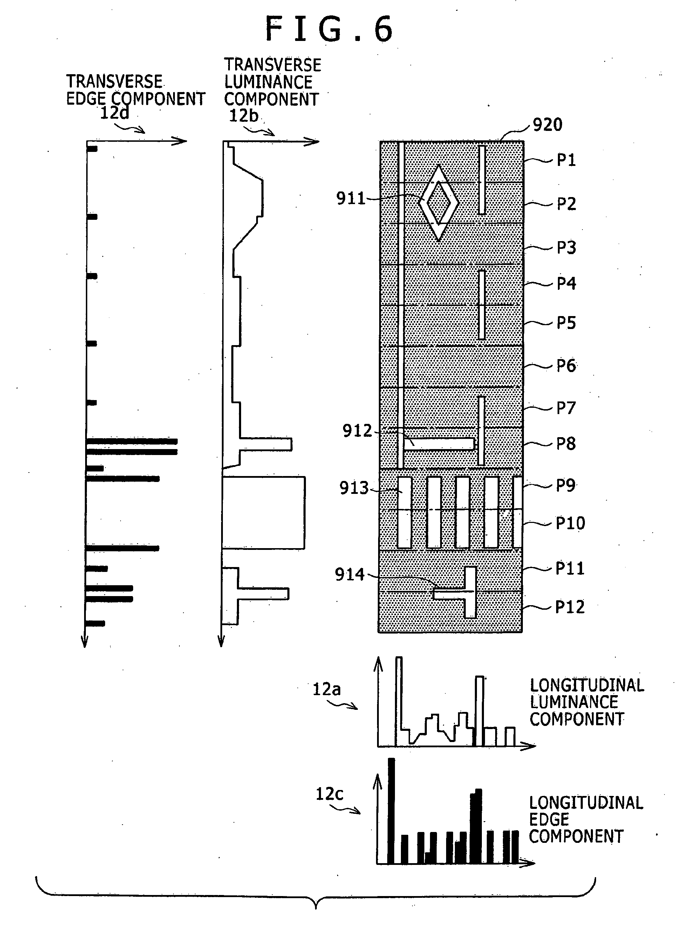

Referring back to FIG. 4, the road sign determination section 122 executes the feature quantity extraction process for the mosaic image 920 (step S14). More specifically, upon reception of the instruction for the feature quantity extraction process, the road sign determination section 122 executes a luminance projection process and an edge extraction process for the longitudinal and transverse directions of the mosaic image 920. FIG. 6 illustrates a practical example of the execution. More specifically, FIG. 6 is a schematic view illustrating the results of executions of the luminance projection process and the edge extraction process for the mosaic image 920 with respect to longitudinal and transverse directions.

The luminance projection process is a process that detects amounts of luminance projection by, for example, projecting the luminances of the respective pixels of the mosaic image 920 in the longitudinal and transverse directions. The process enables the road sign determination section 122 to acquire a longitudinal luminance component 12a and a transverse luminance component 12b such as illustrated in FIG.6 as elements of the quantity of features.

The edge extraction process is a process that extracts, for example, an area where the density abruptly has changed from that of the mosaic image 920 in accordance with a boundary line thereof. Further, by accumulating the amounts of edge components in the respective longitudinal and transverse directions, the road sign determination section 122 is able to acquire a longitudinal edge component 12c and a transverse edge component 12d as elements of the quantity of features.

The elements of the quantity of features to be extracted are not limited to those described above. For example, distributions, intensities, and cumulative values of various images can be used as the elements of the quantity of features.

Referring back to FIG. 4, the road sign determination section 122 executes template matching (step S15). More specifically, the road sign determination section 122 obtains a correlation value (similarity) per element of the quantity of features of the mosaic image 920 to a template 13. Then, the road sign determination section 122 performs a comparison of the respective correlation value to a predetermined threshold value T₂.

As a consequence, if a template 13 corresponding to correlation values that are all greater than or equal to threshold value T₂ has been detected (step S15: YES), the positional information regarding a conformance record inclusive of the template 13 is passed to the positional information generation section 123. Then, an instruction for generation of positional information is issued to the positional information generation section 123, and processing proceeds to step S16. In the event where multiple templates 13 have been detected, a conformance record including a template 13 corresponding to a greatest correlation value is passed. In the event that no template corresponding to all correlation values greater than or equal to the threshold value T₂ has been detected (step S15: NO), processing determines that no conformance record is present, returns to step S11, and iterates the process.

For computing correlation values in the template matching, any method may be used. For example, a template matching method using a neural network can be used. Further, there is no limitation to the template matching method, and any other methods, such as a discriminatory analysis method, may be used.

The threshold value T₂ is a value determined for the respective element for use in determination of conformity with the template. Hence, the respective threshold value T₂ can be set to an arbitrary value. For example, setting of the threshold value T₂ to an even lower value eases the extraction of the conformance record even when the road sign is scratchy or unclear. Further, although all the elements do not satisfy the threshold value T₂, when a predetermined number of elements are greater than or equal to a threshold value, a record corresponding thereto may be determined to be a conformance record.

Further, the positional information generation section 123 detects factors contained in the mosaic image 920, namely, the type of a road sign and the distance and angle to a road sign closest from the vehicle 90, thereby to generate positional information (step S16). More specifically, upon reception of a generation instruction for positional information, the positional information generation section 123 acquires type information 13e from the conformance record, and identifies the type of a road sign closest from the vehicle 90 from among multiple road signs contained in the mosaic image 920. Then, the positional information generation section 123 detects a distance S and an angle θ to a road sign closest from the vehicle 90, thereby to generate positional information.

Any method may be used to detect the distance and the angle. However, the method may be such that, for example, the edge extraction process is executed for the mosaic image 920, and then as illustrated in FIG. 2, feature points indicative of the shape of the road sign are extracted at, for example, corners and peripheries, and the distance S and the angle θ can be computed.

Then, the positional information generation section 123 outputs the generated positional information to the vehicular navigational system 80 via the I/F section 130 (step S17). Then, processing terminates.

The above has thus described the process in which the road sign recognition apparatus 10 generates the positional information of the road sign contained in the real images. According to the flow, the quantity of features is extracted from the stored images, and the template matching in accordance with the combination thereof is executed. Then, in accordance with the implications of a road sign present on the surface of a road over which the vehicle 90 traveled in the past and a road sign immediately after the vehicle 90 has traveled can be detected with high accuracy.

Road signs to be stored into the identification table 1131 may be arbitrarily combined. For example, only combinations of road signs with high frequency can be stored, such as combinations (an "presence of pedestrian crossing" item and a "stop line"), (the "stop line" and the "pedestrian crossing"), and (the "pedestrian crossing" and an "intersection"). According to the configuration, the probability of misrecognition can be further reduced.

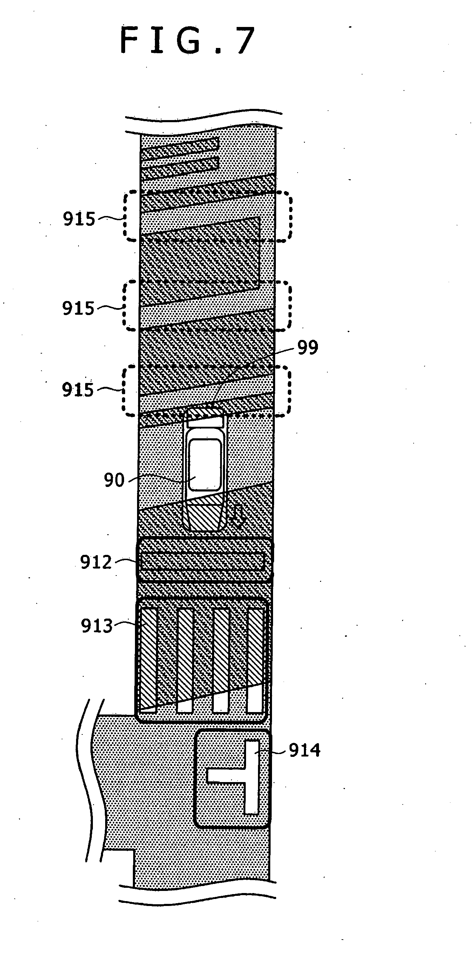

For example, as illustrated in FIG. 7, a linear area 915 inclusive of a road surface with a high luminance value caused by shadows can be misrecognized as the "stop line". However, only when high frequency combinations, such as described above, are stored as combinations to be stored in the identification table 1131, since no records conforming to the "stop line" with low frequency are detected, they are not recognized as road signs.

The present invention is not limited to the embodiment described above, and various modifications can be made within the scope of the invention.

### (Modified Example 1)

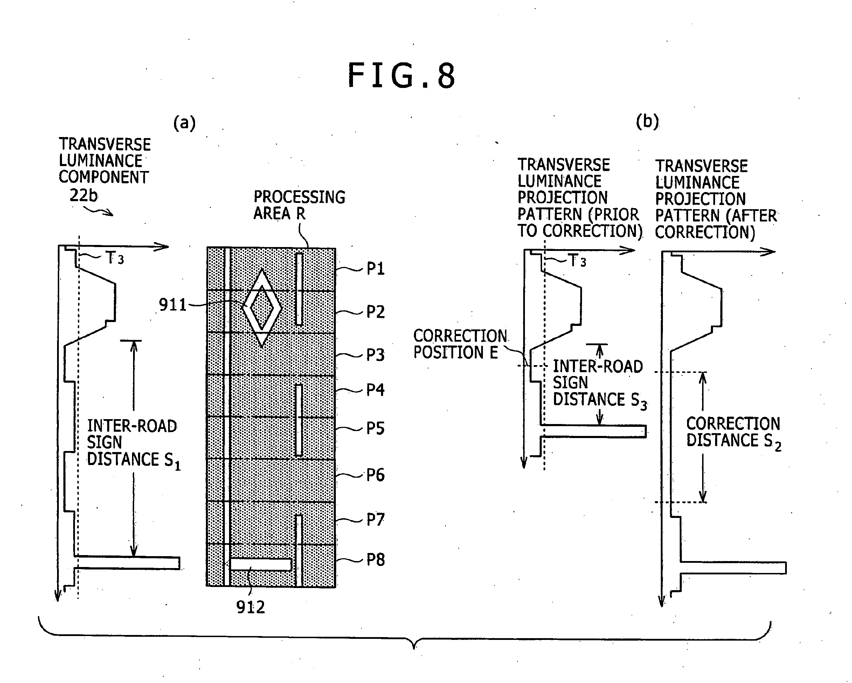

In the embodiment described above, template matching is execution for the mosaic image 920, for example, but it is not limited thereto. The method may be such that a predetermined processing area R is extracted from the mosaic image 920, and template matching is executed for the processing area R. A modified example 1, such as described above, is described in more detail below. FIG. 8(a) is a schematic view of a processing area R (P1-P8) and a transverse luminance component 22b corresponding thereto.

When, at step S14, having received from the image generation section 121 an instruction for extraction of a quantity of features, the road sign determination section 122 may extract an area inclusive of two road signs closest to the vehicle 90 from the mosaic image 920 as the processing area R. The number of road signs included in the processing area R is not limited to the above, and may be any number inasmuch as it is multiple.

For example, with reference to FIG. 8, the processing area R is extracted in the manner that two areas respectively having cumulative luminance values greater than or equal to a threshold value T₃ from the side of the vehicle 90 are detected. Then, target areas P, which are inclusive of the above-described areas (P1 to P3 and P8 in FIG. 8) and areas (P4 to P7) therebetween are extracted as the processing area R. The threshold value T₃ is set to a value slightly greater than a cumulative luminance value of a roadway outer side line and a roadway center line. However, any value may be set inasmuch as a target road sign is detectable.

Thereafter, the road sign determination section 122 executes the feature quantity extraction process for the processing area R, and then executes template matching for the extracted quantity of features with the template 13. Further, in the embodiment described above, the road sign is determined through one time of template matching. According to the present modified example, multiple times of template matching can be executed for a single road sign. This is described below with reference to FIG. 2.

For example, in the event that the vehicle 90 has traveled from the position of P0 to the position of P9, the road sign determination section 122 determines the areas P1 to P8 as the processing area R. Then, the road sign determination section 122 identifies a "presence of pedestrian crossing" item 911 and a "stop line" 912. Here, the road sign determination section 122 causes the storage section 110 to store therein the "stop line" of the closest road sign. Then, processing terminates.

Thereafter, when the vehicle 90 has traveled to P11, the road sign determination section 122 determines the area from P8 to P10 to be the processing area R, and identifies the "stop line" 912 and the "pedestrian crossing" 913 through template matching. Then, the road sign determination section 122 performs the comparison of the type "stop line" of a road sign on the far side from the vehicle 90 with the type of a road sign that is stored into the storage section 110. If the types of the two road signs conform with one another, the type of the road sign in P8 is defined as the "stop line", an instruction for the generation of the "stop line" 912 designation is issued to the positional information generation section 123.

According to the configuration described above, by limiting the mosaic image processing area, the operational burden on the apparatus can be reduced and the mosaic image processing time can be reduced. Further, multiple times of template matching are executed on one road sign, thereby enabling identification with even higher accuracy.

### (Modified Example 2)

In the embodiment and modified example described above, the distance between road signs contained in the mosaic image 920 (and the processing area R thereof) does not necessarily conform with the distance between road signs of the quantity of features indicated in the template 13. In this case, there is a probability that, whereas the road signs are in the same combination, a record is not detected and hence the matching accuracy is reduced.

Of course, in the case where a template containing a variety of inter-road sign distances is provided, template matching with high accuracy can be accomplished. In this case, however, a very large number of templates is necessary.

Then, in the event that no conformance record is detected as a result of template matching at step S15, the road sign determination section 122 may execute a process in the manner that the template 13 is corrected to thereby improve the accuracy of the template 13. This is described in more detail below with reference to an example case where, as a result of template matching with the processing area R (P1 to P8) illustrated in FIG. 8(a), it is determined that a conformance record corresponding thereto is not present.

FIG. 8(b) is a schematic view illustrating a transverse luminance projection pattern prior to correction and a transverse luminance projection pattern after correction in the template 13 in the case where the road sign includes the "presence of pedestrian crossing" item and the "stop line".

In the event that a conformance record is not present as a result of template matching, the road sign determination section 122 determines whether the distance between road signs contained in the processing area R is a distance causing reduction of the accuracy of template matching.

More specifically, the road sign determination section 122 detects an inter-road sign distance S₁ between areas each having the cumulative luminance value greater than or equal to the threshold value T₃ in the transverse luminance component 22b. In the event that the distance S₁ is greater than or equal to a threshold value T₄, it is determined that there is a probability that the accuracy of the template matching is reduced due to the inter-road sign distance S₁, and hence a template correction process is executed. In the event that the distance S₁ is not greater than or equal to the threshold value T₄, the processing returns to the initial process (step S11), thereby to iterate the process.

Subsequently, the road sign determination section 122 corrects the transverse luminance projection pattern 13b and transverse edge pattern 13d of the template 13 by a correction distance S₂ in the longitudinal direction in a predetermined correction position E. The correction distance S₂ may be set not only to increase the length of the template by increasing the pixels in the longitudinal direction, but also to reduce the length of the template by reducing the pixels around the correction position E. Further, the value can be set progressively to match with any inter-road sign distance S₁. Further, it may be that a distance S₃ between areas each having a cumulative luminance value greater than or equal to the threshold value T₃ is detected, and the distance S₃ is corrected to be identical to the inter-road sign distance S₁.

Upon detection of a conformance record as a result of a re-execution of template matching by using the corrected template 13, the road sign determination section 122 executes identification of the type of the road sign by using the detected conformance record.

According to the configuration described above, the template matching accuracy can be improved without requiring a template including a variety of inter-road sign distances.

### (Modified Example 3)

According to the embodiment and modified examples described above, the identification table 1131 stores therein information per road sign including two or more combinations. Hence, the road sign recognition apparatus 10 performs the road sign identification in accordance with the combinations. However, the present invention is not limited thereto.

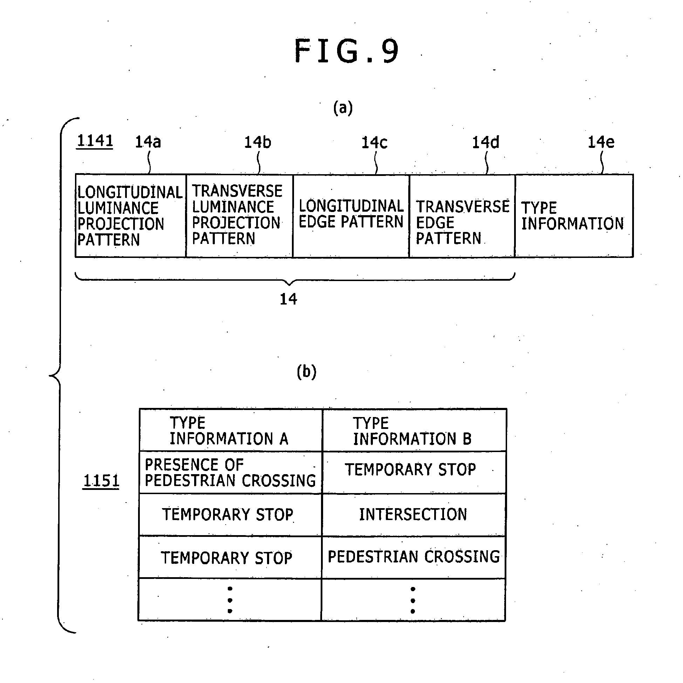

For example, an identification table 1141 as illustrated in FIG. 9(a) may be provided. The identification table 1141 includes a template 14 in units of one road sign, in which the template 14 is indicative of the quantity of features of the road sign. Further, the storage section 110 preliminarily stores therein an arrangement table 1151 as illustrated in FIG. 9(b) that stores therein road sign combinations as type information A and type information B in order from the side of the vehicle 90. The type information to be stored in the arrangement table 1151 may be provided not only as two combinations, but also as an arbitrary number of combinations.

According to the configuration described above, at step S15 the road sign determination section 122 executes template matching with the template 14 in units of a road sign contained in the mosaic image 920 (processing area R).

In the case where the processing area R and the quantity of features thereof such as illustrated in FIG. 8(a) are extracted, the conformance record is extracted from the identification table 1141 for the respective target area P (P1 to P3 and P8 in FIG. 8) including areas each greater than or equal to the threshold value T₃ in the transverse luminance component 22b. Then, the road sign determination section 122 acquires type information 14e of the conformance record and determines that the road signs in the respective areas are the "presence of the pedestrian crossing" item and "stop line".

Subsequently, the road sign determination section 122 retrieves a record containing the type information of the "stop line"-"presence of pedestrian crossing" item combination from the arrangement table 1151. In the event that the record is present, the road sign determination section 122 fixedly determines the type of the road sign present in the P1-P3 area to be the "presence of pedestrian crossing" item, and verifies the road sign present in the P8 area to be the "stop line". Then, the instruction for generation of positional information of the "stop line" 912 is issued to the positional information generation section 123.

In the event that as a result of template matching, the road sign of the "stop line" cannot be determined due to, for example, a scratchy state, a record in which the other road sign "presence of pedestrian crossing" item is detected from the arrangement table 1151. Thereby, road signs corresponding to an estimated combination can be known.

As such, template matching is re-executed for the processing area R (P8) by alleviating a conformance condition for conformance to the correlation value (such as reduction of the threshold value T₂). When, as a result, a conformance record conforming to the estimated combination is detected, it can be fixedly determined.

According to the configuration described above, even when one of the road signs cannot be recognized, the type is estimated from the combination with another road sign, so that identification with high probability can be accomplished.

### (Second Embodiment)

Next, a road sign recognition apparatus 20 of a second embodiment is described below. According to the road sign recognition apparatus 20 of the second embodiment, the template is defined by using, for example, information from sensors provided in a vehicle and information on road signs present in peripheral portions from the vehicular navigational system, thereby to make it possible to securely accomplish road sign identification with even higher accuracy. The second embodiment is described below mainly regarding points different from the first embodiment.

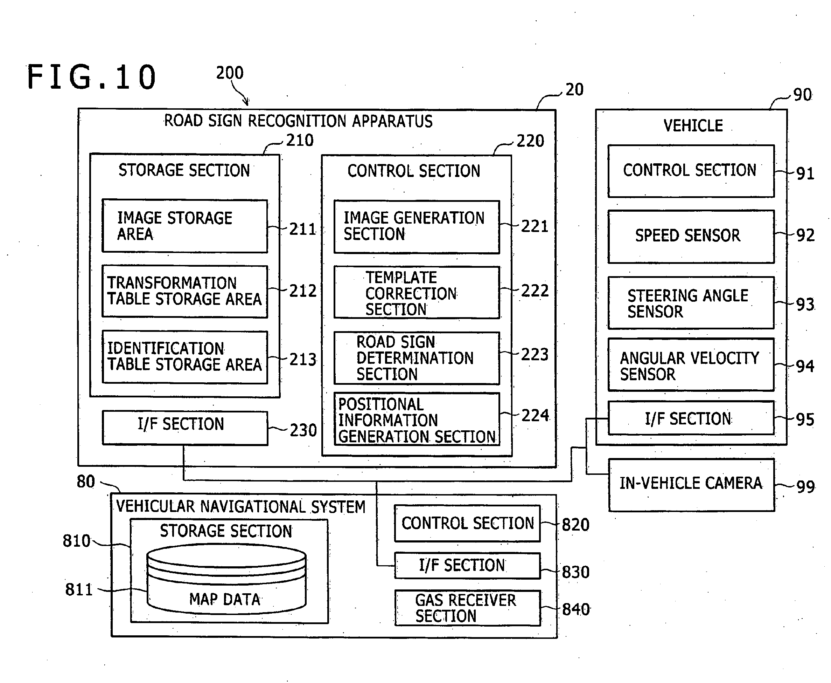

FIG. 10 is a block diagram illustrating a functional configuration of a road sign recognition system 200.

The road sign recognition system 200 includes the road sign recognition apparatus 20, a vehicular navigational system 80, a vehicle 90, and an in-vehicle camera 99.

The vehicular navigational system 80 includes a storage section 810, a control section 820, an I/F section 830, and a GPS receiver section 840.

The storage section 810 stores therein map data 811. The map data 811 is map information configured from nodes and links. The node refers to an intersection or a point where the number of lanes and the widths of the lanes are changed. The link refers to a vector connecting between adjoining nodes. The nodes and links are managed by using tables. Generally, a node table contains information (not illustrated) of, for example, the coordinates of nodes, link IDs (identifiers) of connection destination, distances thereto, the directions thereof, and the widths thereof. In addition to the information, a node table and link table contained in the map data 811 of the present embodiment contains positional information designating the coordinates of road signs present in the nodes and links, and type information designating the type of the road signs.

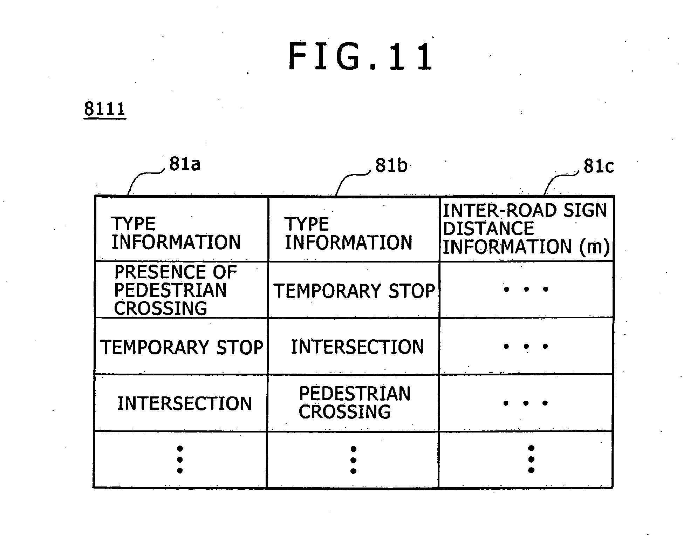

Upon reception of an output instruction for peripheral information from the road sign recognition apparatus 20, the control section 820 generates peripheral information 8111 as illustrated in FIG. 11. The peripheral information 8111 is' information that designates the combinations of road signs present in peripheral portions of the vehicle 90, and the distances between the road signs.

More specifically, the control section 820 detects a road sign present within a predetermined range about the current position and present on a road continuous from a currently located node and link. Then, mutually adjacent road signs are stored in combination as type information 81a and type information 81b, and the distance between the road signs in units of the combination is stored as inter-road sign distance information 81c. The peripheral information 8111 thus generated is output to the road sign recognition apparatus 20 via the I/F section 830.

The I/F section 830 is an interface for effecting communication with the road sign recognition apparatus 20, and may utilize any method of communication.

The GPS receiver section 840 receives signals from a GPS satellite. In addition, the vehicular navigational system 80 may include, for example, a VICS receiver section (VICS: vehicle information and communication system) that receives road traffic information distributed from a VICS center via, for example, FM broadcasting stations in various areas and beacons provided to roads.

The road sign recognition apparatus 20 includes a storage section 210, a control section 220, and an I/F section 230.

The storage section 210 includes an image storage area 211, a transformation table storage area 212, and an identification table storage area 213.

The image storage area 211, the transformation table storage area 212, and the identification table storage area 213 are, respectively, configured similar to the image storage area 111, the transformation table storage area 112, and the identification table storage area 113 of the first embodiment. Hence, detailed descriptions thereof are omitted herefrom.

The control section 220 includes an image generation section 221, a template correction section 222, a road sign determination section 223, and a positional information generation section 224.

The image generation section 221 acquires a frame image 900 from the in-vehicle camera 99, and transforms the frame image 900 to a top-view image 910. Further, the image generation section 221 acquires vehicle information related to a running or traveling status from the vehicle 90, and generates a mosaic image 920 from the top-view image 910 in accordance with the traveling status. This process is described in more detail below.

The template correction section 222 acquires information regarding road signs present in a peripheral portion of the vehicle 90 from the vehicular navigational system 80, and corrects the template 13 in accordance with the acquired information. More specifically, the template correction section 222 extracts a record containing combinations similar to the type information contained in the peripheral information 8111 from the identification table 1131. Then, in accordance with the inter-road sign distance contained in the peripheral information 8111, a transverse luminance projection pattern 13b and a transverse edge pattern 13d of the template 13 are increased and reduced in length, thereby to correct the template 13.

The road sign determination section 223 extracts the quantity of features from the mosaic image, and executes template matching with the corrected template 13, thereby determining the types of the road signs contained in the mosaic image.

The positional information generation section 224 generates positional information related to the road signs, and output the information to the vehicular navigational system 80 via the I/F section 130.

The vehicle 90 includes a control section 91, a speed sensor 92, and a steering angle sensor 93, an angular velocity sensor 94, and an I/F section 95.

Upon reception of a vehicle information output instruction from the road sign recognition apparatus 20, the control section 91 outputs information regarding the running speed, steering angle, and angular velocity of the vehicle 90, which information have been acquired from the respective sensors, to the road sign recognition apparatus 20 via the I/F section 95.

The speed sensor 92 detects a running speed of the vehicle 90 and outputs a vehicle speed signal corresponding to the speed shutter speed. The speed sensor 92 may be any sensor inasmuch as it is capable of detecting the vehicle speed. More specifically, the speed sensor 92 may be any one of a vehicle wheel speed sensor, which detects of the rotation speed of a respective vehicle wheel, and a rotation sensor, which detects the rotation speed of an axle operably connecting to the vehicle wheels.

The steering angle sensor 93 outputs a steering angle signal corresponding to the direction and degree of a steering angle input by a vehicle driver. The steering angle to be detected is, for example, a rotation speed and rotation direction from zero point of a steering wheel of the vehicle 90.

The angular velocity sensor 94 detects the angular velocity in a yawing direction, that is, a yaw angle. As the angular velocity sensor 94, a gyro-type sensor using a coriolis force, such as that of an electrostatic capacitance type or piezoelectric type. The angular velocity sensor 94 may further detect the acceleration.

The sensors included in the vehicle 90 are not limited to those described above, the vehicle 90 may further includes other sensors, such as geomagnetic sensors.

The I/F section 95 is an interface for effecting communication with the road sign recognition apparatus 20.

The in-vehicle camera 99 is configured similar to that of the first embodiment, so that detailed descriptions thereof are omitted herefrom.

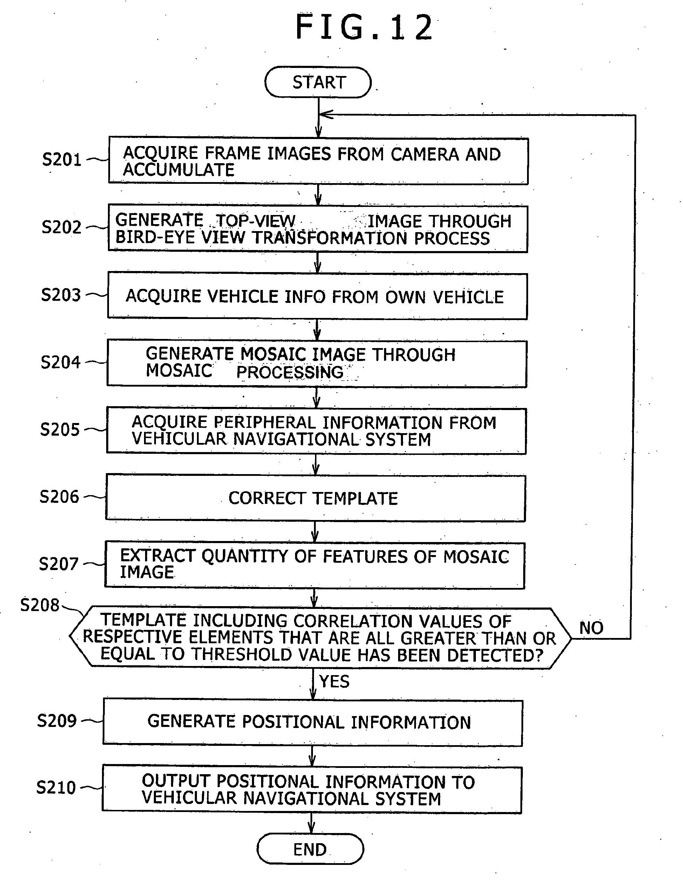

Processes to be executed in the road sign recognition apparatus 20 configured as described above is described with reference to a flow diagram illustrated in FIG. 12. FIG. 12 is flow diagram illustrating the flow of a process that the road sign recognition apparatus of the second embodiment executes to generate positional information from real images.

The image generation section 221 first acquires a frame image 900 from images captured by the in-vehicle camera 99, and accumulates or stores them into the image storage area 111 (step S201).

Then, the image generation section 221 executes a top-view transformation process for the frame image 900, thereby generating a top-view image 910 (step S202).

Subsequently, the image generation section 221 issues to the vehicle 90 an instruction for transmission of vehicle information, whereby the vehicle information is acquired (step S203).

Upon reception of the instruction for transmission of the vehicle information, the vehicle 90 outputs, as vehicle information, information regarding the running speed, steering angle, and angular velocity of the vehicle 90 to the road sign recognition apparatus 20 via the I/F section 95.

The image generation section 221 executes a mosaic processing in accordance with the acquired vehicle information, thereby generating a latest mosaic image (step S204). While the image generation section 221 executes the mosaic processing similar to that in the first embodiment, there is a difference in that the vehicle information is utilized when the top-view image 910 is connected to the mosaic image 920 (step S133).

More specifically, the image generation section 221 executes an optimization process of the image by determining an execution levels of processes regarding, for example, noise removal and edge enhancement from the running speed contained in the acquired vehicle information. Further, a process can be executed to detect left and right shifts, tilts, or the like and to correct them. Of course, the adaptation of the vehicle information is not limited to the above, and can be utilized in various other processes. Then, after the generation of the mosaic image 920, the image generation section 221 issues an instruction to the template correction section 222 for correction of the template 13.

The template correction section 222 issues an instruction to the vehicular navigational system 80 for transmission of peripheral information, thereby to acquire the information (step S205).

Upon reception of the instruction for transmission of the peripheral information, the vehicular navigational system 80 generates peripheral information 8111. The generated peripheral information 8111 is output to the road sign recognition apparatus 20 via the I/F section 830.

Subsequently, the template correction section 222 corrects the template 13 in accordance with the peripheral information 8111 (step S206). More specifically, the template correction section 222 detects from the identification table 1131, a record containing type information item 13e containing the same combination (disordered) as the type information 81a and the type information 81b.

Then, the template correction section 222 executes a correction process for increasing and reducing the lengths the transverse luminance projection pattern 13b and transverse edge pattern 13d in the longitudinal direction in a predetermined correction position E in accordance with the inter-road sign distance information 81c contained in the peripheral information 8111. Thereafter, the template correction section 222 issues an instruction to the road sign determination section 223 for extraction of the quantity of features of the mosaic image 920.

Subsequently, upon reception of the instruction for the extraction process for extracting the quantity of features, the road sign determination section 223 executes the feature quantity extraction process for the mosaic image 920 (step S207).

Then, the road sign determination section 223 executes template matching with the mosaic image 920 by using the corrected template 13 (step S208). More specifically, the road sign determination section 223 obtains a correlation value (similarity) per element of the quantity of features, and performs a comparison of the respective correlation value to the predetermined threshold value T₂.

As a consequence, if a template 13 corresponding to correlation values that are all greater than or equal to threshold value T₂ has been detected (step S208: YES), information related to a conformance record inclusive of the template 13 is passed to the positional information generation section 224. Then, an instruction for generation of positional information is issued to the positional information generation section 224, and processing proceeds to step S209. In the event that no template corresponding to all correlation values greater than or equal to the threshold value T₂ has been detected (step S208: NO), processing determines that no conformance record is present, returns to step S201, and iterates the process.

The positional information generation section 224 detects factors contained in the mosaic image, namely, the type of a road sign and the distance and angle to a road sign closest from the vehicle 90, thereby to generate positional information (step S209). Then, the positional information generation section 224 outputs the generated positional information to the vehicular navigational system 80 via the I/F section 230 (step S210). Then, processing terminates.

According to the configuration described above, the road sign recognition apparatus 20 of the present embodiment is able to a mosaic image with even higher quality from the information regarding the vehicle 90.

Further, even more accurate template matching can be accomplished in the manner that information regarding road signs present in the peripheral portion is acquired from the vehicular navigational system 80, and the template 13 is further defined and corrected.

The peripheral information may further contain dimensional information specifying the sizes of road signs in correlation to the type information. According to this configuration, the template correction section 222 is enabled to correct the quantity of features of the template in more detail.

Further, the configuration may be such that road signs having features are managed in units of a local region, in which information such as an address is acquired from the vehicular navigational system 80, and the template is further defined corresponding to the locality.
The above-described features, embodiments and examples may be combined in any way, partly or as a whole.

## Claims

1. A road sign recognition apparatus comprising:
an image generation unit (121; 221) that generates a synthetic image (920) so that a plurality of images an in-vehicle camera (99) captured are respectively transformed to images downwardly viewing from a vertical direction and are connected to one another in time-series order; and
an identification unit (122; 223) that identifies types of road signs contained in the synthetic image (920) in a manner that a quantity of features of the synthetic image is extracted and compared to a preliminarily provided template (13; 14).

2. The road sign recognition apparatus according to claim 1, wherein the identification unit (122; 223) extracts the quantity of features in units of the road sign contained in the synthetic image (920), and identifies the types of the road signs when the quantity of features is in a predetermined combination.

3. The road sign recognition apparatus according to claim 1 or claim 2, wherein the template (13; 14) contains a quantity of features of a plurality of road signs.

4. The road sign recognition apparatus according to at least one of claims 1 - 3, wherein the identification unit (122; 223) segments an area containing a plurality of road signs from the synthetic image (920), and identifies the types of the road signs contained in the area.

5. The road sign recognition apparatus according to claim 3 or claim 4, wherein the identification unit (122; 223)
acquires peripheral information designating the types of road signs present in a predetermine range from a vehicle (90) and in a continuous combination; and
identifies the types of the road signs contained in the synthetic image (920) from the contents of the template (13; 14) wherein the combination of the types are identical to the peripheral information.

6. The road sign recognition apparatus according to claim 5, wherein
the peripheral information further includes a distance between the road signs in the continuous combination and dimensions of the respective road signs; and
the road sign recognition apparatus further comprises correction unit (222) that corrects the quantity of features stored in the template (13; 14) in accordance with the peripheral information.

7. The road sign recognition apparatus according to at least one of claims 1 - 6, further comprising a position detection unit (224) that detects a relative position of the vehicle (90) to the identified road sign.

8. A road sign recognition method comprising the steps:
generating a synthetic image (920) so that a plurality of images an in-vehicle camera (99) captured are respectively transformed to images downwardly viewing from a vertical direction and are connected to one another in time-series order; and
identifying types of road signs contained in the synthetic image (920) in a manner that a quantity of features of the synthetic image (920) is extracted and compared to a preliminarily provided template (13; 14).

9. The road sign recognition method according to claim 8, wherein the step of identifying extracts the quantity of features in units of the road sign contained in the synthetic image (920), and identifies the types of the road signs when the quantity of features is in a predetermined combination.

10. The road sign recognition method according to claim 8 or claim 9, wherein the template (13; 14) is a quantity of features of a plurality of road signs combined.
